# EUROPEAN PATENT APPLICATION

(11) **EP 4 776 611 A1**
(43) Date of publication of application: **15.07.2026**
(21) Application number: 24862371.2
(22) Date of filing: 22.04.2024
(51) Int. Cl.: H04N 19/107, H04N 19/136, H04N 19/159, H04N 19/166, H04N 19/176

(54) **ENCODING DEVICE AND ENCODING METHOD**

(30) Priority: 07.09.2023 JP 2023145197
(71) Applicant: Panasonic Intellectual Property Management Co., Ltd., Kadoma-shi, Osaka 571-0057 (JP)
(72) Inventor: INAGAKI, Hiroki, kadoma-shi, Osaka 571-0057 (JP)
(74) Representative: Novagraaf International SA
(86) International application number: PCT/JP2024/015677
(87) International publication number: WO 2025/052714

(57) **Abstract**

An encoding device (100) includes a processor (140) and an encoder (120) that encodes an encoding target frame in units of blocks. The processor (140) obtains an index that indicates a visibility of image quality differences between blocks within the encoding target frame, determines whether to apply intra-refresh to the encoding target frame based on the obtained index, and controls the encoder (120) to encode the encoding target frame based on a result of the determination.

## Description

### [Technical Field]

The present disclosure relates to an encoding device and an encoding method.

### [Background Art]

In general video coding standards (for example, H.264 (MPEG-4 AVC), H.265 (HEVC), H.266 (VVC), VP9, AV1, etc.), techniques that compress data by utilizing data redundancy between frames are employed. Therefore, data loss in one frame causes image quality degradation in other frames that directly and indirectly reference that one frame. This chain of image quality degradation between frames is broken by frames that are intra-encoded without using reference frames (hereinafter referred to as intra-frames). However, intra-frames cause increased transmission delays due to the increased data size.

To address this, intra-refresh has been proposed to limit the chain of image quality degradation with lower delay than intra-frames by forcibly intra-encoding a region corresponding to part of a frame (see, for example, Patent Literature (PTL) 1).

### [Citation List]

### [Patent Literature]

[PTL 1] Japanese Unexamined Patent Application Publication (Translation of PCT Application) No. 2008-516561.

### [Summary of Invention]

### [Technical Problem]

However, with intra-refresh, image quality may be significantly degraded by the region corresponding to the part of a frame that is forcibly intra-encoded (hereinafter referred to as an intra-region).

In view of this, the present disclosure provides an encoding device and the like that can inhibit image quality degradation caused by intra-refresh.

### [Solution to Problem]

An encoding device according to one aspect of the present disclosure includes: a processor; and an encoder that encodes an encoding target frame in units of blocks. The processor: obtains an index that indicates a visibility of image quality differences between blocks within the encoding target frame; determines whether to apply intra-refresh to the encoding target frame based on the index obtained; and controls the encoder to encode the encoding target frame based on a result of the determination.

General or specific aspects of the present disclosure may be realized as a system, a method, an integrated circuit, a computer program, or a computer-readable recording medium, or any given combination of a system, a device, a method, an integrated circuit, a computer program, and a recording medium. The computer-readable recording medium includes, for example, a non-volatile recording medium such as a compact disc-read only memory (CD-ROM).

### [Advantageous Effects of Invention]

According to the present disclosure, image quality degradation caused by intra-refresh can be inhibited.

### [Brief Description of Drawings]

[FIG. 1]

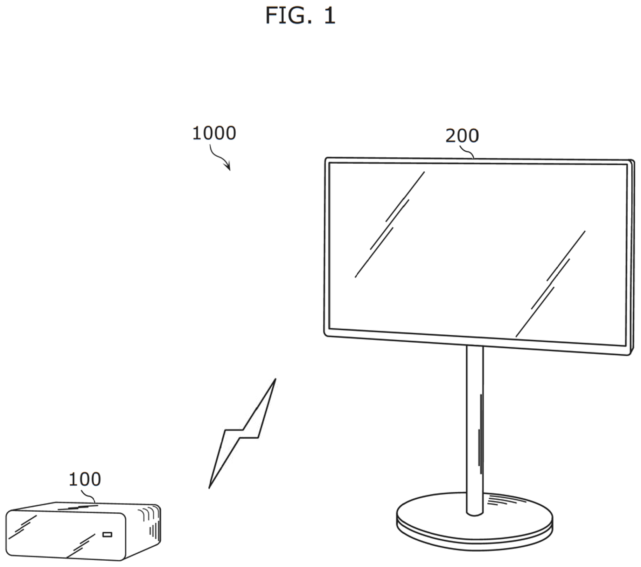

   FIG. 1 is an external view of an encoding/decoding system according to an embodiment of the present disclosure.
[FIG. 2]

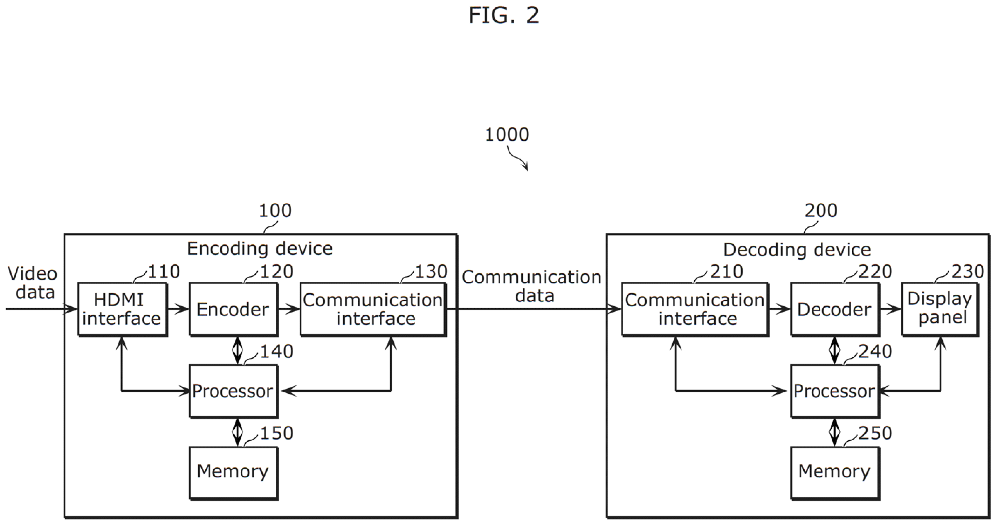

   FIG. 2 is a functional configuration diagram of an encoding/decoding system according to an embodiment of the present disclosure.
[FIG. 3]

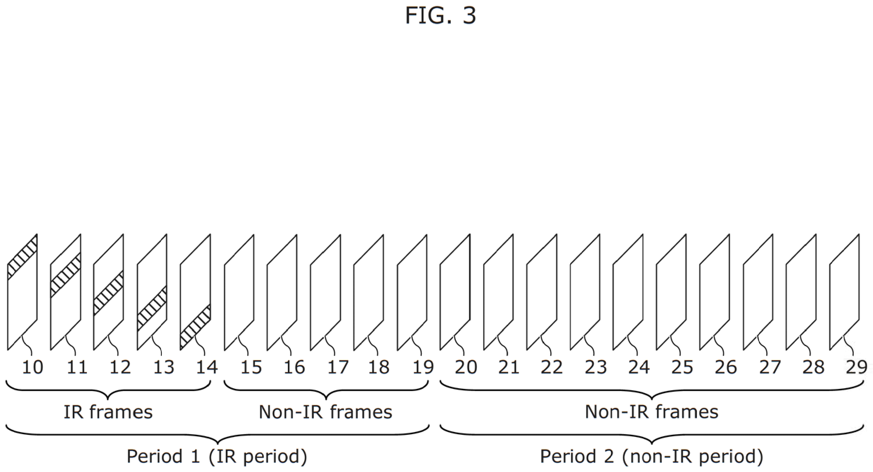

   FIG. 3 illustrates an example of a video sequence for explaining intra-refresh.
[FIG. 4]

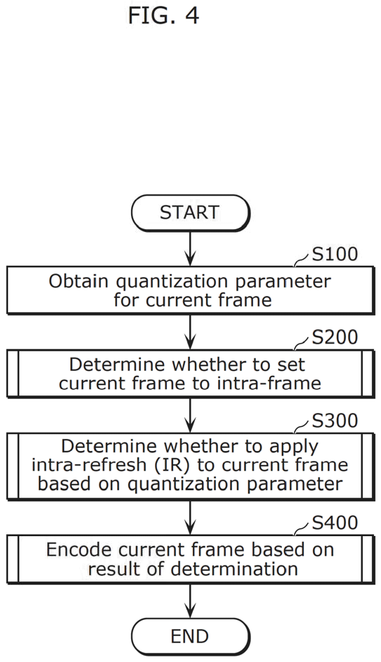

   FIG. 4 is a flowchart illustrating an encoding method according to an embodiment of the present disclosure.
[FIG. 5]

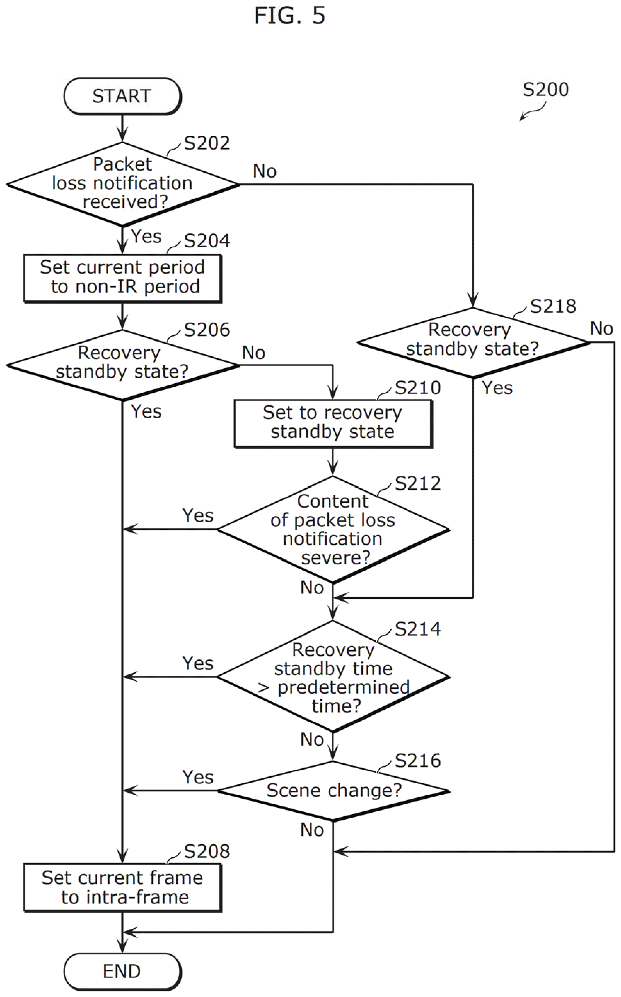

   FIG. 5 is a flowchart illustrating intra-frame determination processing according to an embodiment of the present disclosure.
[FIG. 6]

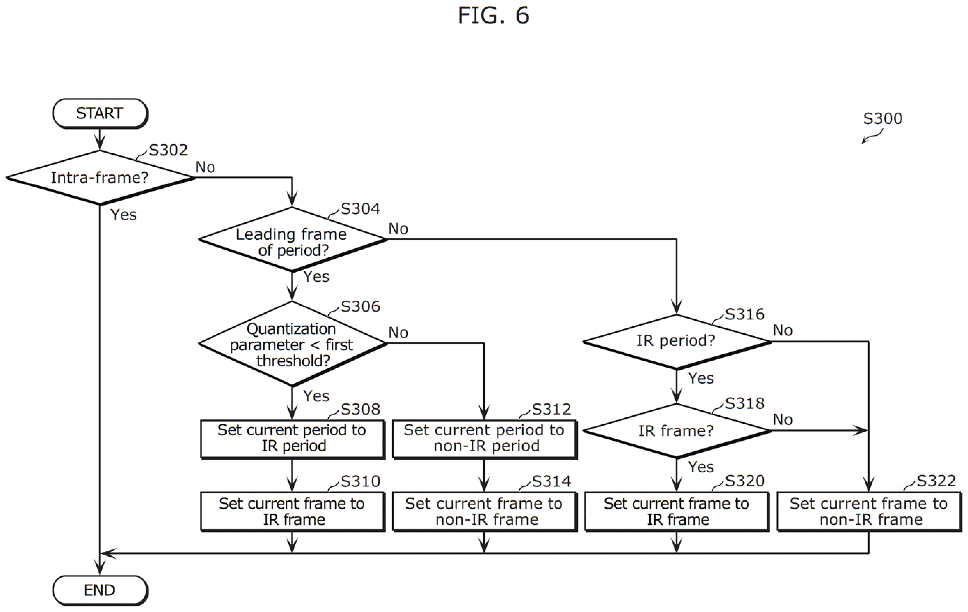

   FIG. 6 is a flowchart illustrating intra-refresh determination processing according to an embodiment of the present disclosure.
[FIG. 7]

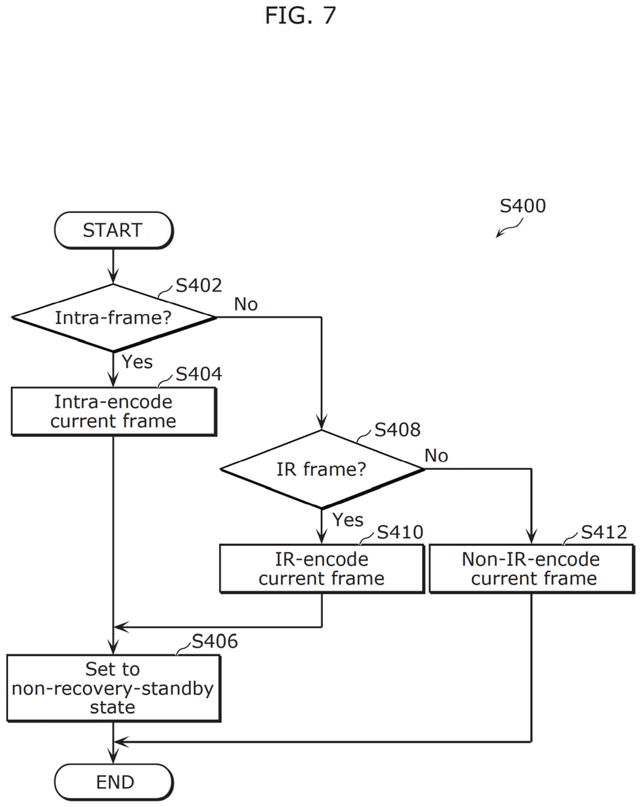

   FIG. 7 is a flowchart illustrating frame encoding processing according to an embodiment of the present disclosure.
[FIG. 8]

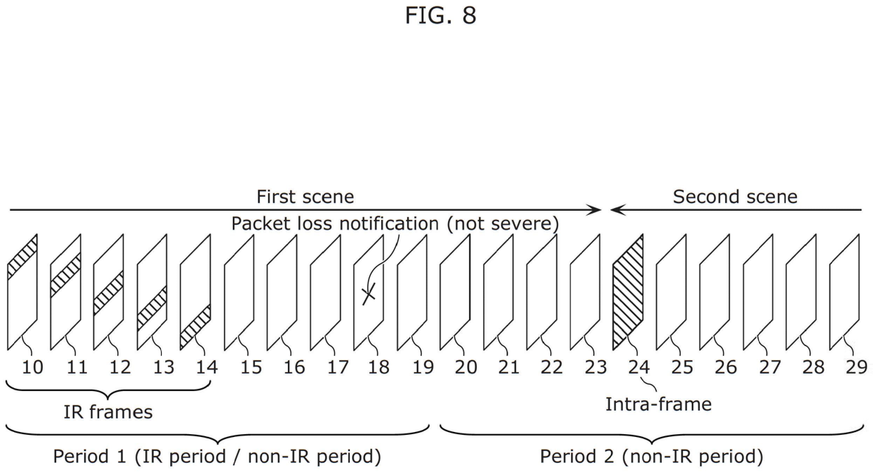

   FIG. 8 illustrates an example of a video sequence encoded by an encoding device according to an embodiment of the present disclosure.

### [Description of Embodiments]

### (Overview of the Present Disclosure)

Before describing the embodiment, an overview of the present disclosure will be described. In intra-refresh, a region corresponding to part of a frame is forcibly intra-encoded. Therefore, image quality degradation becomes prominent when block distortion between intra-encoded blocks and blocks encoded by other methods is easily visible. Stated differently, image quality degradation due to intra-refresh becomes prominent when image quality differences between blocks within a frame are easily visible.

An encoding device according to a first aspect of the present disclosure includes: a processor; and an encoder that encodes an encoding target frame in units of blocks. The processor: obtains an index that indicates a visibility of image quality differences between blocks within the encoding target frame; determines whether to apply intra-refresh to the encoding target frame based on the index obtained; and controls the encoder to encode the encoding target frame based on a result of the determination.

With this, a determination of whether to apply intra-refresh to the encoding target frame is performed based on an index that indicates the visibility of image quality differences between blocks within the encoding target frame. Therefore, application and non-application of intra-refresh can be switched on a frame-by-frame basis according to the visibility of image quality differences between blocks. As a result, image quality degradation caused by image quality differences between regions that are forcibly intra-encoded by intra-refresh and other regions can be inhibited.

An encoding device according to a second aspect of the present disclosure is the encoding device according to the first aspect, wherein the processor: obtains, as the index, a value of a quantization parameter of the encoding target frame; and determines to apply the intra-refresh to the encoding target frame when the value of the quantization parameter is less than a first threshold, and determines not to apply the intra-refresh to the encoding target frame when the value of the quantization parameter is greater than or equal to the first threshold.

With this, the value of the quantization parameter can be used as an index that indicates the visibility of image quality differences between blocks. Generally, the quantization parameter is used for bit rate control. More specifically, by increasing the value of the quantization parameter, the quantization step size when quantizing the prediction error signal can be increased, and the bit rate can be reduced. However, when the quantization step size increases, information loss in the prediction error signal due to quantization (quantization distortion) increases, so the visibility of image quality differences between intra-encoded blocks and inter-encoded blocks increases. Therefore, by determining not to apply intra-refresh to the encoding target frame when the value of the quantization parameter is greater than or equal to the first threshold, intra-refresh can be disabled when the visibility of image quality differences between blocks is high. As a result, it is possible to inhibit increased visibility of image quality differences between regions that are forcibly intra-encoded by intra-refresh and other regions, and image quality degradation due to intra-refresh can be inhibited.

An encoding device according to a third aspect of the present disclosure is the encoding device according to the first aspect, wherein the processor: obtains, as the index, a value of a skip mode selection rate in a frame preceding the encoding target frame; and determines not to apply the intra-refresh to the encoding target frame when the value of the skip mode selection rate is greater than or equal to a second threshold, and determines to apply the intra-refresh to the encoding target frame when the value of the skip mode selection rate is less than the second threshold.

With this, the value of the skip mode selection rate can be used as an index that indicates the visibility of image quality differences between blocks. Generally, in skip mode, since encoding of the prediction error signal is omitted, the bit rate can be reduced, but distortion tends to increase. Therefore, when a low bit rate is required, the value of the skip mode selection rate increases, and the visibility of image quality differences between intra-encoded blocks and other blocks (including blocks encoded in skip mode) increases. Therefore, by determining not to apply intra-refresh to the encoding target frame when the value of the skip mode selection rate is greater than or equal to a second threshold, intra-refresh can be disabled when the visibility of image quality differences between blocks is high. As a result, it is possible to inhibit increased visibility of image quality differences between regions that are forcibly intra-encoded by intra-refresh and other regions, and image quality degradation due to intra-refresh can be inhibited.

An encoding device according to a fourth aspect of the present disclosure is the encoding device according to the first aspect, wherein the processor: obtains, as the index, a value of an intra mode selection rate in a frame preceding the encoding target frame; and determines to apply the intra-refresh to the encoding target frame when the value of the intra mode selection rate is greater than or equal to a third threshold, and determines not to apply the intra-refresh to the encoding target frame when the value of the intra mode selection rate is less than the third threshold.

With this, the value of the intra mode selection rate can be used as an index that indicates the visibility of image quality differences between blocks. When the value of the intra mode selection rate increases, the number of blocks that are intra-encoded increases, and the visibility of image quality differences between blocks that are forcibly intra-encoded by intra-refresh and other blocks decreases. Conversely, when the value of the intra mode selection rate decreases, the visibility of image quality differences between blocks that are forcibly intra-encoded by intra-refresh and other blocks increases. Therefore, by determining not to apply intra-refresh to the encoding target frame when the value of the intra mode selection rate is less than the third threshold, intra-refresh can be disabled when the visibility of image quality differences between blocks is high. As a result, it is possible to inhibit increased visibility of image quality differences between regions that are forcibly intra-encoded by intra-refresh and other regions, and image quality degradation due to intra-refresh can be inhibited.

An encoding device according to a fifth aspect of the present disclosure is the encoding device according to the first aspect, wherein the processor: obtains, as the index, a value of a change amount between the encoding target frame and a frame preceding the encoding target frame; and determines to apply the intra-refresh to the encoding target frame when the value of the change amount is greater than or equal to a fourth threshold, and determines not to apply the intra-refresh to the encoding target frame when the value of the change amount is less than the fourth threshold.

With this, the value of the change amount between frames can be used as an index that indicates the visibility of image quality differences between blocks. When the value of the change amount between frames is large, the prediction accuracy of inter prediction decreases, the difference between the prediction error of intra prediction and the prediction error of inter prediction becomes smaller, and the visibility of image quality differences between blocks due to intra-refresh decreases. Conversely, when the value of the change amount between frames is small, the prediction accuracy of inter prediction improves, the difference between the prediction error of intra prediction and the prediction error of inter prediction becomes larger, and the visibility of image quality differences between blocks due to intra-refresh increases. Therefore, by determining not to apply intra-refresh to the encoding target frame when the value of the change amount is less than the fourth threshold, intra-refresh can be disabled when the visibility of image quality differences between blocks is high. As a result, it is possible to inhibit increased visibility of image quality differences between regions that are forcibly intra-encoded by intra-refresh and other regions, and image quality degradation due to intra-refresh can be inhibited.

An encoding device according to a sixth aspect of the present disclosure is the encoding device according to any one of the first aspect to the fifth aspect, wherein the processor determines whether to apply the intra-refresh on a period basis, where the period is a period for intra-refresh that includes the encoding target frame.

With this, since whether to apply intra-refresh is determined on a period-by-period basis, the load of the intra-refresh determination process can be reduced.

An encoding device according to a seventh aspect of the present disclosure is the encoding device according to the sixth aspect, wherein the encoding target frame is a leading frame of the period for the intra-refresh.

With this, application/non-application of intra-refresh can be determined at the leading frame of the period for intra-refresh, simplifying the intra-refresh determination process.

An encoding device according to an eighth aspect of the present disclosure is the encoding device according to any one of the first aspect to seventh aspect, further including: a communication interface that transmits, by packet communication, a plurality of encoded frames including the encoding target frame that is encoded. The processor further: when recovery standby occurs in the encoding target frame due to packet loss in communication of a frame preceding the encoding target frame, determines whether a standby time of the recovery standby is longer than a predetermined time; and in response to determining that the standby time is longer than the predetermined time, sets the encoding target frame to an intra-frame.

With this, an intra-frame is inserted when the recovery standby time is long. Therefore, image quality degradation caused by packet loss continuing over a long period can be inhibited.

An encoding method according to a ninth aspect of the present disclosure is a method of encoding an encoding target frame in units of blocks, and includes: obtaining an index that indicates a visibility of image quality differences between blocks within the encoding target frame; determining whether to apply intra-refresh to the encoding target frame based on the index obtained; and encoding the encoding target frame based on a result of the determination.

With this, the same effects as the above encoding device can be achieved with an encoding method.

A program according to a tenth aspect of the present disclosure is for causing a computer to execute the encoding method according to the ninth aspect.

With this, the same effects as the above encoding device can be achieved with a program.

### [Embodiment]

Hereinafter, an embodiment of the present disclosure will be described in detail with reference to the drawings.

Each embodiment described below shows a general or specific example. The numerical values, shapes, materials, elements, the arrangement and connection of the elements, steps, and order of the steps, etc., shown in the following embodiments are mere examples, and therefore do not intend to limit the techniques of the present disclosure.

Note that the figures are schematic illustrations and are not necessarily precise depictions. Accordingly, the figures are not necessarily to scale. In the figures, elements that are essentially the same share the same reference signs, and repeated description may be omitted or simplified in some cases.

In the following, all or part of circuits, units, or devices, or all or part of functional blocks in block diagrams may be implemented by one or more electronic circuits including, for example, semiconductor devices, semiconductor integrated circuits (ICs), or large scale integration (LSI) circuits. The LSI circuit or IC may be integrated on a single chip, or may be configured by combining a plurality of chips. For example, functional blocks other than storage elements may be integrated on a single chip. Although these circuits are referred to as LSI circuits or ICs here, the terminology may change depending on the degree of integration, and these circuits may be called system LSI circuit, a very large scale integration (VLSI) circuit, or an ultra large scale integration (ULSI) circuit. A field programmable gate array (FPGA) that is programmed after manufacturing an LSI circuit, or a reconfigurable logic device (RLD) that can reconfigure connection relationships within an LSI circuit or set up circuit sections within an LSI circuit can also be used for the same purpose.

Furthermore, all or part of circuits, units, or devices, or all or part of functional blocks in block diagrams can also be implemented by a software program. In such cases, the software program is recorded on one or more non-transitory storage media such as ROM, optical disks, and hard disk drives, and when the software program is executed by a processor, the functions specified in the software program are executed by the processor and peripheral devices. A system or device may include one or more non-transitory storage media storing a software program, a processor, and required hardware devices (such as memory, interfaces, etc.).

### [Configuration of Encoding/Decoding System 1000]

First, the configuration of encoding/decoding system 1000 according to the present embodiment will be described in detail with reference to FIG. 1 and FIG. 2. FIG. 1 is an external view of encoding/decoding system 1000 according to the present embodiment. FIG. 2 is a functional configuration diagram of encoding/decoding system 1000 according to the present embodiment. Note that FIG. 1 and FIG. 2 illustrate an exemplary configuration of encoding/decoding system 1000, and the configuration of encoding/decoding system 1000 is not limited to the following description.

Encoding/decoding system 1000 includes encoding device 100 and decoding device 200 that are wirelessly connected to each other. Note that the connection between encoding device 100 and decoding device 200 is not limited to wireless connection. For example, encoding device 100 may be connected to decoding device 200 by wired connection in addition to wireless connection, or instead of wireless connection.

Encoding device 100 is, for example, a High-Definition Multimedia Interface (HDMI) (registered trademark) sink device, and can encode video data received from an HDMI source device and transmit the encoded video data to decoding device 200. Note that encoding device 100 is not limited to an HDMI sink device. For example, encoding device 100 may be a set-top box, TV tuner, or digital video camera.

Decoding device 200 is, for example, a liquid crystal display or organic EL display, and can decode and display encoded video data received from encoding device 100. Note that decoding device 200 may be a portable device (for example, a tablet computer or smartphone) or a wearable device (for example, a smart watch or smart glasses). In such cases, the decoded video data may be displayed on a display panel of the portable device or wearable device.

### [Internal Configuration of Encoding Device 100]

Next, the internal configuration of encoding device 100 will be described. Encoding device 100 includes HDMI interface 110, encoder 120, communication interface 130, processor 140, and memory 150.

HDMI interface 110 is an interface for receiving video data. The video data includes a plurality of frames. For example, HDMI interface 110 can receive HDMI video data from an HDMI source device via an HDMI cable. Note that HDMI interface 110 need not be included in encoding device 100.

Encoder 120 can encode video data received by HDMI interface 110. More specifically, encoder 120 can encode, in units of blocks, encoding target frames included in the video data. Note that encoder 120 can use intra-refresh in the encoding of encoding target frames. Intra-refresh is a technology that can limit the chain of image quality degradation with low delay by forcibly intra-encoding a region corresponding to part of a frame (i.e., an intra-region) and periodically changing the position of the intra-region across a plurality of frames.

A block is a region obtained by dividing an encoding target frame. A block may also be referred to as a macroblock, coding unit (CU), or prediction unit (PU), depending on the video coding standard.

Communication interface 130 is an interface for wirelessly communicating with decoding device 200. For example, communication interface 130 can packetize video data encoded by encoder 120 and transmit the obtained communication data to decoding device 200. Note that communication interface 130 may be an interface for wired communication with decoding device 200, and need not be included in encoding device 100.

Processor 140 is a circuit that performs information processing and is a circuit capable of accessing memory 150. Processor 140 can control encoder 120 and may further be configured to control HDMI interface 110 and/or communication interface 130. Processor 140 can perform various control and information processing by executing software programs stored in memory 150.

More specifically, processor 140 can obtain an index that indicates how visible image quality differences are between blocks within an encoding target frame. In the present embodiment, the index that indicates how visible image quality differences are between blocks within an encoding target frame is a quantization parameter of the encoding target frame.

A quantization parameter is a parameter that controls the quantization step size when quantizing a prediction error signal. When the value of the quantization parameter increases, it results in larger quantization step sizes, which reduces the bit rate but also increases information loss in the prediction error signal being quantized (quantization distortion). In intra-encoding and inter-encoding, the methods for generating prediction error signals differ, so as quantization distortion increases, the visibility of image quality differences between intra-encoded blocks and inter-encoded blocks increases. Stated differently, when the value of the quantization parameter increases, it results in larger quantization step sizes, and the visibility of image quality differences between blocks due to intra-refresh increases. Conversely, when the value of the quantization parameter decreases, it results in smaller quantization step sizes, and the visibility of image quality differences between blocks due to intra-refresh decreases.

Note that the quantization parameter of the encoding target frame means a quantization parameter determined for the encoding target frame. The quantization parameter of the encoding target frame may be adjustable in units of slices, tiles, blocks, or transform coefficients within blocks in the encoding target frame.

Next, processor 140 can determine whether to apply intra-refresh to the encoding target frame based on the obtained index. For example, processor 140 may compare the value of the quantization parameter with a first threshold and determine whether to apply intra-refresh to the encoding target frame based on the result of the comparison.

More specifically, processor 140 may determine to apply intra-refresh to the encoding target frame when the value of the quantization parameter is less than the first threshold. With this, processor 140 can determine to apply intra-refresh to the encoding target frame when the visibility of image quality differences between blocks is relatively low. Conversely, processor 140 may determine not to apply intra-refresh to the encoding target frame when the value of the quantization parameter is greater than or equal to the first threshold. With this, processor 140 can determine not to apply intra-refresh to the encoding target frame when the visibility of image quality differences between blocks is relatively high.

As the first threshold, a value of the quantization parameter that indicates that the visibility of image quality differences between blocks is sufficiently low to apply intra-refresh can be used. The first threshold may be predetermined experimentally and/or empirically and stored in memory 150. The first threshold may be fixed or may be variable according to encoding parameters. For example, the first threshold may vary according to the resolution of the encoding target frame. Since the visibility of image quality differences between blocks decreases as the resolution increases, the first threshold may be set higher for higher resolutions. For example, as the first threshold, "34" may be used for 4K resolution and "20" may be used for 2K resolution.

Finally, processor 140 can control encoder 120 to encode the encoding target frame based on the result of the determination of whether to apply intra-refresh to the encoding target frame.

Memory 150 can store information for processor 140 to control encoder 120. Memory 150 may be an electronic circuit, or may be an assembly of a plurality of electronic circuits. Memory 150 may be either non-volatile memory or volatile memory, or may be a combination of non-volatile memory and volatile memory. Note that memory 150 may be included in processor 140.

### [Internal Configuration of Decoding Device 200]

Next, the internal configuration of decoding device 200 will be described. Decoding device 200 includes communication interface 210, decoder 220, display panel 230, processor 240, and memory 250.

Communication interface 210 is an interface for wirelessly communicating with encoding device 100. For example, communication interface 210 can receive communication data transmitted by encoding device 100, depacketize the communication data, and output the obtained encoded video data to decoder 220. Note that communication interface 210 may be an interface for wired communication with encoding device 100, and need not be included in decoding device 200.

Decoder 220 can decode encoded video data. More specifically, decoder 220 can decode, in units of blocks, decoding target frames included in the encoded video data.

Display panel 230 can display video data decoded by decoder 220. Display panel 230 may be a liquid crystal display panel or an organic EL display panel, and is not limited to these. Note that display panel 230 need not be included in decoding device 200.

Processor 240 is a circuit that performs information processing and is a circuit capable of accessing memory 250. Processor 240 can control decoder 220 and may further be configured to control communication interface 210 and/or display panel 230.

Memory 250 can store information for processor 240 to control decoder 220. Memory 250 may be an electronic circuit, or may be an assembly of a plurality of electronic circuits. Memory 250 may be either non-volatile memory or volatile memory, or may be a combination of non-volatile memory and volatile memory. Note that memory 250 may be included in processor 240.

### [Intra-refresh]

Next, intra-refresh will be described with reference to FIG. 3. FIG. 3 illustrates an example of a video sequence for explaining intra-refresh. Note that in the following, frames to which intra-refresh is applied are referred to as IR frames, and frames to which intra-refresh is not applied are referred to as non-IR frames.

Here, a period is a period for intra-refresh. More specifically, the period refers to the repetition period of an arrangement of IR frames, or the repetition period of an arrangement of IR frames and non-IR frames. In FIG. 3, each period has a length of 10 frames. Stated differently, if the frame rate is 60 hertz, one period is 1/6 of a second. Note that the length of the period may be fixed or may be variable.

FIG. 3 illustrates period 1 and period 2 included in the video sequence. Period 1 is a period during which intra-refresh is applied (hereinafter referred to as an IR period), and includes IR frames 10 to 14 and non-IR frames 15 to 19 in a predetermined order. Period 2 is a period during which intra-refresh is not applied (hereinafter referred to as a non-IR period), and includes non-IR frames 20 to 29 and does not include any IR frames.

IR frames 10 to 14 include intra-regions (the hatched regions in FIG. 3) at mutually different positions. The intra-region is a set of blocks that are forcibly intra-encoded, and in FIG. 3 is one or more block lines. By distributing intra-regions at different positions across a plurality of frames, it is possible to inhibit concentration of code amount in any one frame, and it is possible to provide a decoding starting point (recovery point) even when image data of any region is lost due to packet loss. Regions other than the intra-regions (the non-hatched regions in FIG. 3) are a set of blocks for which intra-encoding and inter-encoding can be selected.

Note that the shape and arrangement of the intra-regions are not limited to the shape and arrangement in FIG. 3. It is sufficient if any given block at any given position within a frame is included in an intra-region one or more times in any frame within one period. For example, an intra-region may be one or more block columns extending in the vertical direction.

Non-IR frames 15 to 29 include regions for which intra-encoding and inter-encoding can be selected, and do not include intra-regions that are forcibly intra-encoded.

Note that the configuration of the IR period is not limited to the configuration in FIG. 3. For example, the length of the period may be 60 frames. In such cases, if the frame rate is 60 hertz, one period is 1 second. Also, for example, the ratio of the number of IR frames and non-IR frames included in the IR period is not limited to 1:1. For example, the IR period may include only IR frames. Stated differently, the IR period need not include non-IR frames. Also, for example, the IR period need not continuously include a plurality of IR frames. Stated differently, the IR period may discretely include a plurality of IR frames. Also, for example, the leading frame of the IR period may be a non-IR frame rather than an IR frame.

### [Encoding Method]

Next, an encoding method executed by encoding device 100 will be described with reference to FIG. 4 through FIG. 8. FIG. 4 is a flowchart illustrating an encoding method according to the present embodiment. Note that FIG. 4 illustrates an exemplary flowchart of the encoding method, and the steps of the encoding method and the order of the steps are not limited to the following description.

Processor 140 obtains a quantization parameter for the current frame (S100). For example, processor 140 determines a quantization parameter for the current frame based on a preset target code amount (target bit rate). Stated differently, processor 140 determines the quantization parameter so that the target bit rate is satisfied. A current frame is an encoding target frame, and may also be referred to as an encoding target picture or current picture.

Processor 140 determines whether to set the current frame to an intra-frame (S200). Step S200 will be described in greater detail later with reference to FIG. 5. Note that step S200 is an optional step and need not be included in the encoding method according to the present embodiment.

Processor 140 determines whether to apply intra-refresh (IR) to the current frame based on the quantization parameter (S300). Stated differently, processor 140 determines whether to set the current frame as an IR frame based on the quantization parameter. Step S300 will be described in greater detail later with reference to FIG. 6.

Encoder 120 encodes the current frame based on the result of the determination (S400). Stated differently, processor 140 controls encoder 120 to encode the current frame based on the result of the determination. Step S400 will be described in greater detail later with reference to FIG. 7.

### [Details of Intra-Frame Determination Processing]

Here, the intra-frame determination processing (step S200 of FIG. 4) will be described in greater detail with reference to FIG. 5. FIG. 5 is a flowchart illustrating intra-frame determination processing according to the present embodiment. Note that FIG. 5 illustrates an exemplary flowchart of the intra-frame determination process, and the intra-frame determination process is not limited to the following description.

Processor 140 determines whether a packet loss notification has been received from communication interface 130 (S202). A packet loss notification is a notification indicating that packet loss has occurred in communication of a frame preceding the current frame. Communication interface 130 notifies processor 140 of packet loss along with the packet loss rate when communication interface 130 detects that the packet loss rate has exceeded a certain value. The packet loss rate is a ratio of the number of packets that communication interface 210 did not receive to the number of packets transmitted by communication interface 130. Note that the packet loss notification is notified based on the packet loss rate in communication of a plurality of packets constituting frames preceding the current frame.

When a packet loss notification has been received (Yes in S202), processor 140 sets the current period including the current frame to a non-IR period (S204). Stated differently, processor 140 sets the current period to an off period of intra-refresh. Note that switching from an IR period to a non-IR period may also occur in the middle of a period.

Processor 140 determines whether the current state is a recovery standby state (S206). The recovery standby state refers to a state in which recovery of the packet loss has not been completed after the packet loss has occurred. Note that a non-recovery-standby state is set as the initial state at the start of a sequence of a plurality of frames including the current frame.

When the current state is not a recovery standby state (No in S206), processor 140 sets the current state to a recovery standby state (S210) and determines whether the content of the packet loss notification is severe (S212). Whether the content of the packet loss notification is severe can be determined based on whether the packet loss notification satisfies "severe conditions". Examples of severe conditions may include packet loss occurring across a threshold number of consecutive frames or more and/or when the packet loss rate is greater than or equal to a threshold. Note that severe conditions are not limited to these examples.

When the content of the packet loss notification is not severe (No in S212), processor 140 determines whether the recovery standby time is longer than a predetermined time (S214). The recovery standby time indicates the duration for which the recovery standby state persists. A time determined in advance can be used as the predetermined time. For example, 20 seconds is used.

When the recovery standby time is not longer than the predetermined time (No in S214), processor 140 determines whether there is a scene change in the current frame (S216). The determination of whether there is a scene change is performed by determining whether a difference value between feature values of the previous frame and feature values of the current frame is greater than or equal to a threshold. As the feature values, for example, representative values (such as arithmetic mean values or median values) of sample values of pixels (luminance values and/or color difference values), or sum of absolute difference values of sample values between adjacent pixels can be used. In the above determination, instead of the feature values, motion estimation results and/or sum of prediction errors may be used.

When there is no scene change in the current frame (No in S216), processor 140 ends the intra-frame determination process. Stated differently, processor 140 skips step S208 and does not set the current frame as an intra-frame.

When the current state is a recovery standby state (Yes in S206), when the content of the packet loss notification is severe (Yes in S212), when the recovery standby time is longer than a predetermined time (Yes in S214), and when there is a scene change in the current frame (Yes in S216), processor 140 sets the current frame as an intra-frame (S208) and ends the intra-frame determination process. Note that in step S208, processor 140 sets the current frame as an intra-frame, but may set a frame after the current frame as an intra-frame. For example, when the current frame is not the leading frame of the current period, processor 140 may set the leading frame of the next period as an intra-frame.

When a packet loss notification has not been received (No in S202), processor 140 determines whether the current state is a recovery standby state (S218). When the current state is not a recovery standby state (No in S218), processor 140 ends the intra-frame determination process. Stated differently, processor 140 skips step S208 and does not set the current frame as an intra-frame. When the current state is a recovery standby state (Yes in S218), processor 140 executes the process of step S214.

### [Details of Intra-refresh Determination Processing]

Next, the intra-refresh determination processing (step S300 of FIG. 4) will be described in greater detail with reference to FIG. 6. FIG. 6 is a flowchart illustrating intra-refresh determination processing according to the present embodiment. Note that FIG. 6 illustrates an exemplary flowchart of the intra-refresh determination process, and the intra-refresh determination process is not limited to the following description.

Processor 140 determines whether the current frame is set to an intra-frame (S302). When the current frame is set to an intra-frame (Yes in S302), the intra-refresh determination processing ends.

When the current frame is not set to an intra-frame (No in S302), processor 140 determines whether the current frame is the leading frame of a period (S304). When the current frame is the leading frame of the period (Yes in S304), processor 140 determines whether the value of the quantization parameter of the current frame is less than the first threshold (S306).

When the value of the quantization parameter of the current frame is less than the first threshold (Yes in S306), processor 140 sets the current period to an IR period (S308). When the value of the quantization parameter is a small value less than the first threshold, image quality differences between intra-encoded blocks and inter-encoded blocks are difficult to visually perceive. Stated differently, even when intra-refresh is applied, image quality differences between intra-regions and other regions are difficult to visually perceive. Therefore, processor 140 can apply intra-refresh while inhibiting image quality degradation by setting the current period to an IR period when the value of the quantization parameter is less than the first threshold. Processor 140 sets the current frame to an IR frame (S310) and ends the intra-refresh determination processing.

When the value of the quantization parameter of the current frame is not less than the first threshold (No in S306), processor 140 sets the current period to a non-IR period (S312). When the value of the quantization parameter is a large value greater than or equal to the first threshold, image quality differences between intra-encoded blocks and inter-encoded blocks are easy to visually perceive. Stated differently, when intra-refresh is applied, image quality differences between intra-regions and other regions are easy to visually perceive. Therefore, processor 140 can inhibit image quality degradation due to intra-refresh by not setting the current period to an IR period when the value of the quantization parameter is greater than or equal to the first threshold. Processor 140 sets the current frame to a non-IR frame (S314) and ends the intra-refresh determination processing.

As described above, processor 140 can determine whether to apply intra-refresh on a period-by-period basis using the leading frame of the period.

When the current frame is not the leading frame of the period (No in S304), processor 140 determines whether the current period is set to an IR period (S316). When the current period is set to an IR period (Yes in S316), processor 140 determines whether the current frame is a frame that can be set to an IR frame within the IR period (S318). Stated differently, processor 140 determines whether the position in order of the current frame within the IR period (for example, display order or encoding order) satisfies a predetermined condition. For example, in the example of FIG. 3, processor 140 determines whether the display order of the current frame within the IR period is included in the range of 1st to 5th frames (frames 10 to 14). When the current frame is a frame that can be set to an IR frame within the IR period (Yes in S318), processor 140 sets the current frame to an IR frame (S320) and ends the intra-refresh determination processing.

When the current period is not set to an IR period (No in S316) and when the current frame is not a frame that can be set to an IR frame within the IR period (No in S318), processor 140 sets the current frame to a non-IR frame (S322) and ends the intra-refresh determination processing.

### [Details of Frame Encoding Processing]

Next, the frame encoding processing (step S400 of FIG. 4) will be described in greater detail with reference to FIG. 7. FIG. 7 is a flowchart illustrating frame encoding processing according to the present embodiment. Note that FIG. 7 illustrates an exemplary flowchart of the frame encoding process, and the frame encoding process is not limited to the following description.

Processor 140 determines whether the current frame is set to an intra-frame (S402). When the current frame is set to an intra-frame (Yes in S402), processor 140 causes encoder 120 to intra-encode the current frame (S404). Furthermore, processor 140 sets the current state to a non-recovery-standby state (S406) and ends the frame encoding process.

When the current frame is not set to an intra-frame (No in S402), processor 140 determines whether the current frame is set to an IR frame (S408). When the current frame is set to an IR frame (Yes in S408), processor 140 causes encoder 120 to IR-encode the current frame (S410). Stated differently, encoder 120 intra-encodes a portion of the current frame based on the position in order of the current frame within the IR period. Thereafter, processor 140 sets the current state to a non-recovery-standby state (S406) and ends the frame encoding process.

When the current frame is not set to an IR frame (No in S408), processor 140 causes encoder 120 to non-IR-encode the current frame (S412) and ends the frame encoding process. Stated differently, encoder 120 does not IR-encode the current frame.

### [Specific Encoding Example]

A specific example of a video sequence encoded by the encoding method as described above will be described with reference to FIG. 8. FIG. 8 illustrates an example of a video sequence encoded by encoding device 100 according to the embodiment.

Since there is no packet loss notification in frame 10, and frame 10 is the leading frame of period 1, it is determined whether the value of the quantization parameter of frame 10 is less than the first threshold. Here, since the value of the quantization parameter of frame 10 is less than the first threshold, period 1 is set to an IR period, and frame 10 is set to an IR frame. As a result, frame 10 is IR-encoded.

There is also no packet loss notification in frames 11 to 17, and the current state is a non-recovery-standby state. Furthermore, period 1 is set to an IR period. Therefore, according to the positions in order of frames 11 to 17 within period 1, frames 11 to 14 are set to IR frames, and frames 15 to 17 are set to non-IR frames. As a result, frames 11 to 14 are IR-encoded, and frames 15 to 17 are non-IR-encoded.

In frame 18, there is a packet loss notification, so period 1 is changed to a non-IR period. Furthermore, the current state is changed from a non-recovery-standby state to a recovery standby state. Here, the packet loss notification is not severe, the recovery standby time is shorter than the predetermined time, and there is no scene change. Therefore, frame 18 is not set to an intra-frame and is not intra-encoded. Furthermore, frame 18 is included in the non-IR period, so it is not set to an IR frame and is not IR-encoded.

In frame 19, there is no packet loss notification, and the current state is a recovery standby state. Furthermore, the recovery standby time is shorter than the predetermined time, and there is no scene change. Therefore, frame 19 is not set to an intra-frame and is not intra-encoded.

Since the value of the quantization parameter of frame 20, which is the leading frame of period 2, is greater than or equal to the first threshold, period 2 is set to a non-IR period. In frames 20 to 23 included in period 2 set to a non-IR period, there is no packet loss notification, and the current state is a recovery standby state. Furthermore, the recovery standby time is shorter than the predetermined time, and there is no scene change. Therefore, frames 20 to 23 are not set to IR frames and are not IR-encoded. As a result, the recovery standby state is maintained.

In frame 24, there is no packet loss notification, and the current state is a recovery standby state. Furthermore, the recovery standby time is shorter than the predetermined time, but the scene has changed from the first scene to the second scene. Therefore, frame 24 is set to an intra-frame and is intra-encoded. As a result, the current state is changed from a recovery standby state to a non-recovery-standby state.

In frames 25 to 29, there is no packet loss notification, and the current state is a non-recovery-standby state. Furthermore, period 2 is set to a non-IR period. Therefore, frames 25 to 29 are set to non-IR frames and are non-IR-encoded.

### [Variation]

While the encoding device and encoding method have been described above based on an embodiment, the encoding device and encoding method according to the present disclosure are not limited to the above embodiment. Other embodiments realized by combining arbitrary elements in the above embodiments, as well as variations that result from applying various modifications that may be conceived by those skilled in the art to the above embodiments without departing from the spirit of the present disclosure, are also included in the present disclosure.

For example, in the above embodiment, the value of the quantization parameter is used as an index that indicates the visibility of image quality differences between blocks within the encoding target frame, but the present disclosure is not limited to this. For example, as an index of image quality differences between blocks, a value of a skip mode selection rate in a frame preceding the encoding target frame may be used. The value of the skip mode selection rate is a value of a ratio of the number of blocks to which skip mode is applied to the number of all blocks included in a frame preceding the encoding target frame. When the value of this skip mode selection rate increases, it results in more skip mode blocks, and the visibility of image quality differences between blocks increases. Conversely, when the value of the skip mode selection rate decreases, it results in fewer skip mode blocks, and the visibility of image quality differences between blocks decreases. Therefore, processor 140 may determine not to apply intra-refresh to the encoding target frame when the value of the skip mode selection rate is greater than or equal to a second threshold, and may determine to apply intra-refresh to the encoding target frame when the value of the skip mode selection rate is less than the second threshold. Stated differently, step S306 of FIG. 6 may be replaced with a step in which it is determined whether or not the value of the skip mode selection rate is less than the second threshold.

As the second threshold, a value of the skip mode selection rate that indicates that the visibility of image quality differences between blocks is sufficiently low to apply intra-refresh can be used. The second threshold may be predetermined experimentally and/or empirically and stored in memory 150. The second threshold may be adaptively determined according to encoding parameters, and the determined second threshold may be encoded in a header.

Also, for example, as an index of image quality differences between blocks, a value of an intra mode selection rate in a frame preceding the encoding target frame may be used. The value of the intra mode selection rate is a value of a ratio of the number of blocks to which intra mode is applied to the number of all blocks included in a frame preceding the encoding target frame. When the value of the intra mode selection rate increases, it results in more intra-mode blocks, and the visibility of image quality differences between blocks due to intra-refresh decreases. Conversely, when the value of the intra mode selection rate decreases, it results in fewer intra-mode blocks, and the visibility of image quality differences between blocks due to intra-refresh increases. Therefore, processor 140 may determine not to apply intra-refresh to the encoding target frame when the value of the intra mode selection rate is less than a third threshold, and may determine to apply intra-refresh to the encoding target frame when the value of the intra mode selection rate is greater than or equal to the third threshold. Stated differently, step S306 of FIG. 6 may be replaced with a step in which it is determined whether or not the value of the intra mode selection rate is greater than or equal to the third threshold.

As the third threshold, a value of the intra mode selection rate that indicates that the visibility of image quality differences between blocks is sufficiently low to apply intra-refresh can be used. The third threshold may be predetermined experimentally and/or empirically and stored in memory 150. The third threshold may be adaptively determined according to encoding parameters, and the determined third threshold may be encoded in a header.

Also, for example, as an index of image quality differences between blocks, a value of a change amount between the encoding target frame and a frame preceding the encoding target frame may be used. The value of the change amount is a value that indicates a change amount of the encoding target frame with respect to a frame preceding the encoding target frame. The value of the change amount may be a sum of magnitudes of motion vectors of each block of the encoding target frame with respect to a frame preceding the encoding target frame. The value of the change amount may be a value of a ratio of the number of blocks having motion vectors with magnitudes greater than or equal to a threshold to the total number of blocks in the encoding target frame. In these cases, when motion between frames is large, the value of the change amount also becomes large, and when motion between frames is small, the value of the change amount also becomes small. The value of the change amount may be a sum of absolute values of differences between each pixel value of the encoding target frame and a corresponding pixel value of a frame preceding the encoding target frame. In such cases, when the change in images between frames is large, the value of the change amount also becomes large, and when the change in images between frames is small, the value of the change amount also becomes small. When the value of the change amount between frames is large, the human eye becomes less able to recognize details on the screen, and the visibility of image quality differences between blocks due to intra-refresh decreases. Conversely, when the value of the change amount between frames is small, the human eye becomes more able to recognize details on the screen, and the visibility of image quality differences between blocks due to intra-refresh increases. Therefore, processor 140 may determine not to apply intra-refresh to the encoding target frame when the value of the change amount is less than a fourth threshold, and may determine to apply intra-refresh to the encoding target frame when the value of the change amount is greater than or equal to the fourth threshold. Stated differently, step S306 of FIG. 6 may be replaced with a step in which it is determined whether or not the value of the change amount is greater than or equal to the fourth threshold.

As the fourth threshold, a value of the change amount that indicates that the visibility of image quality differences between blocks is sufficiently low to apply intra-refresh can be used. The fourth threshold may be predetermined experimentally and/or empirically and stored in memory 150. The fourth threshold may be adaptively determined according to encoding parameters, and the determined fourth threshold may be encoded in a header.

Note that in the above embodiment, although the encoding target frame for which it is determined whether or not to apply intra-refresh based on an index that indicates the visibility of image quality differences between blocks is the leading frame of the period for intra-refresh, the present disclosure is not limited to this. For example, when the leading frame of the period is a non-IR frame, instead of the leading frame, the determination may be performed for a frame in the position of order corresponding to the first IR frame within the period.

### [Industrial Applicability]

The present disclosure can be used in, for example, television receivers, digital video recorders, car navigation systems, mobile phones, digital cameras, or digital video cameras.

### [Reference Signs List]

- 100: encoding device
- 110: HDMI interface
- 120: encoder
- 130, 210: communication interface
- 140, 240: processor
- 150, 250: memory
- 200: decoding device
- 220: decoder
- 1000: encoding/decoding system

## Claims

1. An encoding device comprising:
a processor; and
an encoder that encodes an encoding target frame in units of blocks, wherein
the processor:
obtains an index that indicates a visibility of image quality differences between blocks within the encoding target frame;
determines whether to apply intra-refresh to the encoding target frame based on the index obtained; and
controls the encoder to encode the encoding target frame based on a result of the determination.

2. The encoding device according to claim 1, wherein
the processor:
obtains, as the index, a value of a quantization parameter of the encoding target frame; and
determines to apply the intra-refresh to the encoding target frame when the value of the quantization parameter is less than a first threshold, and determines not to apply the intra-refresh to the encoding target frame when the value of the quantization parameter is greater than or equal to the first threshold.

3. The encoding device according to claim 1, wherein
the processor:
obtains, as the index, a value of a skip mode selection rate in a frame preceding the encoding target frame; and
determines not to apply the intra-refresh to the encoding target frame when the value of the skip mode selection rate is greater than or equal to a second threshold, and determines to apply the intra-refresh to the encoding target frame when the value of the skip mode selection rate is less than the second threshold.

4. The encoding device according to claim 1, wherein
the processor:
obtains, as the index, a value of an intra mode selection rate in a frame preceding the encoding target frame; and
determines to apply the intra-refresh to the encoding target frame when the value of the intra mode selection rate is greater than or equal to a third threshold, and determines not to apply the intra-refresh to the encoding target frame when the value of the intra mode selection rate is less than the third threshold.

5. The encoding device according to claim 1, wherein
the processor:
obtains, as the index, a value of a change amount between the encoding target frame and a frame preceding the encoding target frame; and
determines to apply the intra-refresh to the encoding target frame when the value of the change amount is greater than or equal to a fourth threshold, and determines not to apply the intra-refresh to the encoding target frame when the value of the change amount is less than the fourth threshold.

6. The encoding device according to any one of claims 1 to 5, wherein
the processor determines whether to apply the intra-refresh on a period basis, where the period is a period for intra-refresh that includes the encoding target frame.

7. The encoding device according to claim 6, wherein
the encoding target frame is a leading frame of the period for the intra-refresh.

8. The encoding device according to any one of claims 1 to 5, further comprising:
a communication interface that transmits, by packet communication, a plurality of encoded frames including the encoding target frame that is encoded, wherein
the processor further:
when recovery standby occurs in the encoding target frame due to packet loss in communication of a frame preceding the encoding target frame, determines whether a standby time of the recovery standby is longer than a predetermined time; and
in response to determining that the standby time is longer than the predetermined time, sets the encoding target frame to an intra-frame.

9. An encoding method of encoding an encoding target frame in units of blocks, the encoding method comprising:
obtaining an index that indicates a visibility of image quality differences between blocks within the encoding target frame;
determining whether to apply intra-refresh to the encoding target frame based on the index obtained; and
encoding the encoding target frame based on a result of the determination.

10. A program for causing a computer to execute the encoding method according to claim 9.
